# EUROPÄISCHE PATENTSCHRIFT

(11) **EP 3 160 024 B1**
(45) Veröffentlichungstag und Bekanntmachung des Hinweises auf die Patenterteilung: **20.07.2022**
(21) Anmeldenummer: 16189814.3
(22) Anmeldetag: 21.09.2016
(51) Int. Cl.: H02M 1/32, H02H 9/02, H02M 7/483

(54) **ARMMODUL FÜR MODULAREN MEHRPUNKTUMRICHTER MIT SCHALTBARER FEHLERSTROMBEGRENZUNGSINDUKTIVITÄT**
ARM MODULE FOR MODULAR MULTILEVEL CONVERTER WITH SWITCHABLE FAULTCURRENT LIMITING INDUCTOR
MODULE BRAS D'UN CONVERTISSEUR MODULAIR MULTI-NIVEAUX AVEC UN INDUCTANCE COMMUTABLE POUR LIMITATION DES COURANTS DES FAUTES

(30) Priorität: 21.10.2015 DE 102015220527
(43) Veröffentlichungstag der Anmeldung: 26.04.2017
(73) Patentinhaber: Siemens Energy Global GmbH & Co. KG, 81739 München (DE)
(72) Erfinder: Dorn, Jörg, 96155 Buttenheim (DE); Ergin, Dominik, 91083 Baiersdorf (DE); Gambach, Herbert, 91080 Uttenreuth (DE); Kahlen, Klemens, 90411 Nürnberg (DE); Pieschel, Martin, 90473 Nürnberg (DE); Sachs, Günter, 91074 Herzogenaurach (DE); Schmitt, Daniel, 90459 Nürnberg (DE); Zenkner, Andreas, 90587 Obermichelbach (DE)

(56) Entgegenhaltungen:
- EP-A1- 2 471 164
- EP-A2- 2 747 228
- DE-C1- 19 844 750
- GB-A- 1 123 047
- KR-A- 20140 087 450

## Beschreibung

Die Erfindung betrifft ein Modul nach dem Oberbegriff des Anspruchs 1 sowie ein Verfahren nach dem Anspruch 16.

Es werden zunehmend Hochspannungsgleichstromübertragungssysteme (HVDC) eingesetzt, um z.B. Offshore-Windkraftanlagen mit dem Festland zu verbinden, weil solche Systeme vergleichsweise geringe Energieverluste bei der Energieübertragung verursachen und eine stabilisierende Wirkung für ein angeschlossenes Energienetz, z.B. durch eine Blindleistungskorrektur, entfalten. Ein Teil der Übertragungsverluste entsteht dabei durch Umrichter, die Gleich- in Wechselspannung (und umgekehrt) umrichten. Besonders geeignet sind so genannte Modulare Multi-Level-Umrichter (M2C), bei denen Halbleiterschalter in einer Vielzahl von Modulen mit Kondensatoren so gesteuert werden, dass eine geeignete Ausgangsspannung erzeugt wird.

Modulare Multi-Level-Umrichter werden nicht nur bei HVDC-Anlagen eingesetzt, sondern z.B. auch bei flexiblen Drehstromübertragungssystemen (FACTS), insbesondere bei "Static Synchronous Compensator (STATCOM)" Systemen, mit denen Blindleistung von dem STATCOM in das Netz eingespeist werden kann. Hierfür werden die drei Phasen in einer Dreieckschaltung zusammengeschlossen.

Ein Modularer Multi-Level-Umrichter mit einer Vielzahl von Modulen ist aus der Druckschrift EP 1497911 B1 bekannt.

Bei bisherigen Modulen wird dabei eine einzige Koppelinduktivität eingesetzt, die i.d.R. als Drosselspule ausgebildet ist. Die Koppelinduktivität muss so groß bemessen werden, dass insbesondere im Fehlerfall, also z.B. bei einem Kurzschlussstrom, hohe Ströme im Modul vermieden werden, damit keine Schäden entstehen. Weil an der Koppelinduktivität eine Spannung abfällt, müssen die im Modul eingesetzten Submodule einen Teil der von Ihnen bereit gestellten Spannung aufwenden, um einen Strom über die Koppelinduktivität zu treiben. Insbesondere hängt die Umrichterspannung stark von der Größe der eingesetzten Induktivität ab.

Aus der EP 2 471 164 A1 ist eine Umrichteranordnung in modularer Mehrstufentopologie bekannt. Die Umrichteranordnung umfasst in Reihe geschaltete Vollbrücken-Submodule, wobei jedem der Submodule ein Autotransformator zugeordnet ist, mittels dessen das entsprechende Submodul bei einem Ausfall dieses Submoduls überbrückt werden kann.

Aus der KR 2014 0087450 A ist eine weiter modularer Mehrstufenumrichter bekannt. In jedem Umrichterarm des Mehrstufenumrichters ist eine dynamische Energieversorgungseinheit angeordnet, die in einem Fehlerfall ist durch einspeisen einer Gegenspannung dazu eingerichtet, einen Fehlerstrom durch den Umrichterarm zu reduzieren.

Aus der GB 1 123 047 A ist eine zuschaltbare Induktivität bekannt.

Die EP 2 747 228 A2 offenbart ein weiteres System zur Fehlerbeherrschung in elektrischen Anlagen,

Die DE 198 44 750 C1 offenbart eine Anordnung mit Duplexdrossel zur Kopplung von zwei Energiequellen mit einer Last.

Ausgehend von bekannten Modulen stellt sich an die Erfindung die Aufgabe, ein Verfahren anzugeben, mit dem dynamisch der Betrieb des Umrichters auf die jeweilige Betriebssituation angepasst werden kann.

Die Erfindung löst diese Aufgabe durch ein Modul gemäß Anspruch 1.

Durch die zweite Koppelinduktivität kann im Normalbetrieb des Umrichters, also wenn kein Fehler bzw. Kurzschluss vorliegt, eine kleiner ausgelegte erste Koppelinduktivität als bisher üblich verwendet werden. Nur im Fehlerfall wird die zweite Koppelinduktivität zugeschaltet, um den Fehlerstrom zu beherrschen. Es ist ein wesentlicher Vorteil der Erfindung, dass im Normalbetrieb eine kleinere Anzahl von Submodulen benötigt wird, um einen Strom über die erste Koppelinduktivität zu treiben.

Erfindungsgemäß wird unter einem Modul eine Anordnung mit Submodulen verstanden, die jeweils Halbleiterschalter aufweisen, die bei entsprechender Ansteuerung mittels einer Steuereinrichtung als Ausgabespannung in Summe eine Wechselspannung bereitstellen können. Ein Modul ist dabei in der Regel in einem Zweig eines Umrichters oder eines Statischen Blindleistungsstellers, wie er zur Blindleistungskompensation verwendet wird, angeordnet. Die erste und die zweite Koppelinduktivität werden dabei als Teile der Anordnung aufgefasst, so dass auch ein als separates Bauteil ausgeführtes Modul und die beiden Koppelinduktivitäten zusammen ein erfindungsgemäßes Modul bilden.

Es kann z.B. bei Überschreiten eines vorher festgelegten Grenzstromes innerhalb von 1 ms die zweite Koppelinduktivität zugeschaltet werden, um den Fehlerstrom zu beherrschen.

Teilt man die bisher verwendeten Koppelinduktivität z.B. so auf, dass 2/3 auf die erste Koppelinduktivität und 1/3 auf die zweite Koppelinduktivität entfallen, so können schätzungsweise 5-10 % der Module eingespart werden. Die zweite Koppelinduktivität könnte z.B. 50 mH aufweisen.

Weil jedes Submodul Betriebsverluste erzeugt, z.B. durch Energieverluste beim Schalten der Halbleiterschalter in einem Modul, verringern sich die Energieverluste im Umrichter entsprechend. Dies spart Kosten in erheblicher Höhe ein.

Das Modul kann z.B. in einem Modularer Multi-Level-Umrichter oder in einem Phasenmodul eines "Static Voltage Converters (SVC)" eingesetzt werden. Wird dabei ein dreiphasiges Netz verwendet, so werden i.d.R. drei Module eingesetzt, die jeweils mit der erfindungsgemäßen zweiten Koppelinduktivität versehen werden.

In einer bevorzugten Ausführungsform des erfindungsgemäßen Moduls ist die zweite Koppelinduktivität parallel zu einer Schalteinrichtung geschaltet. Dies ist ein Vorteil, weil die zweite Koppelinduktivität so besonders einfach zugeschaltet oder abgeschaltet werden kann.

In einer weiteren bevorzugten Ausführungsform des erfindungsgemäßen Moduls ist die Schalteinrichtung ausgebildet, im Fehlerfall geöffnet zu werden. Dies ist ein Vorteil, weil im Normalbetrieb die Schalteinrichtung geschlossen gehalten werden kann, so dass die zweite Koppelinduktivität überbrückt ist. Nur im Fehlerfall wird die Schalteinrichtung geöffnet, um den Stromfluss über die zweite Koppelinduktivität zu erzwingen.

In einer weiteren bevorzugten Ausführungsform des erfindungsgemäßen Moduls weist die Schalteinrichtung zwei antiparallel geschaltete Halbleiterschalter auf. Dies ist ein Vorteil, weil mittels der Halbleiterschalter besonders schnell im Fehlerfall geschaltet werden kann, indem die Halbleiterschalter geöffnet werden. Die Ansteuerung der Halbleiterschalter kann dabei z.B. durch eine Modulsteuereinrichtung erfolgen, die auch die Schaltfolgen für Halbleiterschalter in den Submodulen festlegt. Da die Halbleiterschalter im Normalbetrieb geschlossen sind, erzeugen sie bauartbedingt zwar Energieverluste, diese sind jedoch wesentlich geringer als die durch die kleinere Auslegung der ersten Koppelinduktivität eingesparten Energieverluste. Die Halbleiterschalter können z.B. als IGBTs ausgebildet sein.

In einer weiteren bevorzugten Ausführungsform des erfindungsgemäßen Moduls weist die Schalteinrichtung einen mechanischen Schalter auf. Dies ist ein Vorteil, weil ein mechanischer Schalter eine sichere Abschaltung des Fehlerstromes ermöglicht.

In einer weiteren bevorzugten Ausführungsform des erfindungsgemäßen Moduls weist die Schalteinrichtung einen Überspannungsableiter auf. Dies ist ein Vorteil, weil der Überspannungsableiter ein Durchschlagen der Schalteinrichtung verhindert.

In einer weiteren bevorzugten Ausführungsform des erfindungsgemäßen Moduls ist die Schalteinrichtung ausgebildet, im Fehlerfall geschlossen zu werden. Dies ist ein Vorteil, weil auf diese Weise die Schalteinrichtung im Normalbetrieb geöffnet ist, was die Durchlassverluste durch die Schalteinrichtung vermindert.

In einer weiteren bevorzugten Ausführungsform des erfindungsgemäßen Moduls ist die zweite Koppelinduktivität einem Submodul zugeordnet. Dies ist ein Vorteil, weil auf diese Weise die Koppelinduktivität mit einem Submodul z.B. in einer kompakten Bauform kombiniert werden kann.

In einer weiteren bevorzugten Ausführungsform des erfindungsgemäßen Moduls ist mindestens eine zusätzliche Koppelinduktivität vorgesehen. Dies ist ein Vorteil, weil so die insgesamt im Modul zugeschaltete Koppelinduktivität schrittweise erhöht werden kann, um z.B. transiente Fehler unterschiedlicher Größe zu beherrschen. Besonders bevorzugt ist es, wenn jedes oder eine vorgegebene Anzahl ausgewählter Submodule jeweils eine integrierte Koppelinduktivität erhalten, weil so eine besonders gute Skalierbarkeit erreicht wird.

Geeigneterweise weisen die Submodule Halbleiterschalter auf, die im Fehlerfall anders als im Normalbetrieb und jeweils in Abhängigkeit von der gesamten im Modul zugeschalten Koppelinduktivität ansteuerbar sind.

Erfindungsgemäß sind die erste und die zweite Koppelinduktivität (20,50) als magnetisch gekoppelte Teilwicklungen ausgebildet. Dabei sind die beiden magnetisch gekoppelten Teilwicklungen gegensinnig gewickelt. Ähnliche Bauformen für Spulen sind beispielsweise für Bordnetze von Schiffen von der Website "http://www.schild.net/duplexdrossel/1/" bekannt, wobei die Duplexdrosseln dort insbesondere der Erhöhung der Kurzschlusssicherheit dienen. Die Duplexdrossel bildet dabei für zwei Abgänge jeweils getrennte Längsreaktanzen aus, welche die Kurzschlussströme begrenzen.

Es ist ein Vorteil dieser Ausführungsform, dass nur geringe transiente Überspannungen beim Zuschalten der zweiten Koppelinduktivität entstehen. Ferner ist diese Bauform schnell und einfach ansteuerbar sowie mechanisch und elektrisch unempfindlich.

Erfindungsgemäß sind die erste und die zweite Koppelinduktivität als magnetisch gekoppelte und gegensinnig gewickelte Teilwicklungen ausgebildet. Dies ist ein Vorteil, weil diese Bauform besonders platzsparend ist. Bekannt sind so genannte Duplexdrosseln, die als Transformator mittels magnetischer Kopplung über ein Kernmaterial ausgeführt werden. Im Gegensatz dazu kann die zweite Koppelinduktivität auch als eine Luftdrossel mit Mittelanzapfung ausgeführt werden, was geringere Materialkosten bei vergleichbarer Wirkungsweise ermöglicht.

Erfindungsgemäß ist die der zweiten Koppelinduktivität entsprechende Teilwicklung mittels eines Stellglieds zuschaltbar.

Dies ist ein Vorteil, weil so eine Steuerung möglich wird.

In einer weiteren bevorzugten Ausführungsform des erfindungsgemäßen Moduls weist das Stellglied zwei antiparallel geschaltete Halbleiterschalter auf. Diese Halbleiterschalter können beispielsweise ihrerseits aus eine Reihenschaltung von Halbleiterschaltern bestehen. Die Verwendung von Halbleiterschaltern ist ein Vorteil, weil ein schnelles Schalten ermöglicht wird. Außerdem sind Halbleiterschalter im Wesentlichen wartungsfrei zu betreiben und können auch im bestromten Zustand geöffnet werden.

In einer weiteren bevorzugten Ausführungsform des erfindungsgemäßen Moduls weist das Stellglied eine Stromquelle auf. Dies ist ein Vorteil, weil ein kontinuierliches Einstellen der Gesamt-Induktivität möglich wird, wodurch geringere elektrische Belastungen im Betrieb auftreten.

In einer weiteren bevorzugten Ausführungsform des erfindungsgemäßen Moduls weist das Stellglied einen Kondensator auf. Dies ist ein Vorteil, weil der Kondensator auf die Koppelinduktivitäten so abgestimmt werden, dass bei zugeschaltetem Kondensator die effektive Induktivität vergleichsweise niedriger ist.

Ferner stellt sich ausgehend vom bekannten Verfahren zur Beherrschung von Fehlerströmen in einem Umrichter an die Erfindung die Aufgabe, ein Verfahren anzugeben, mit dem dynamisch der Betrieb des Umrichters auf die jeweilige Betriebssituation angepasst werden kann.

Die Erfindung löst diese Aufgabe durch ein Verfahren gemäß Anspruch 13.

Dabei ergeben sich sinngemäß die gleichen Vorteile wie eingangs für das erfindungsgemäße Modul erläutert. Zur besseren Erläuterung der Erfindung zeigen in schematischer Darstellung die
- Figur 1: einen Modularen Multi-Level Umrichter, und
- Figur 2: einen Statischen Blindleistungssteller, und
- Figur 3: ein erstes Beispiel eines Moduls, welches nicht in den Schutzumfang der Ansprüche fällt, und
- Figur 4: eine Detailansicht einer zweiten Koppelinduktivität mit Schalteinrichtung, welche nicht in den Schutzumfang der Ansprüche fällt, und
- Figur 5: ein erstes Ausführungsbeispiel einer Schalteinrichtung, und
- Figur 6: ein zweites Ausführungsbeispiel einer Schalteinrichtung, und
- Figur 7: ein Ausführungsbeispiel einer ersten und zweiten Koppelinduktivität, die als magentisch gekoppelte Teilwicklungen einer einzigen Spule ausgebildet sind.

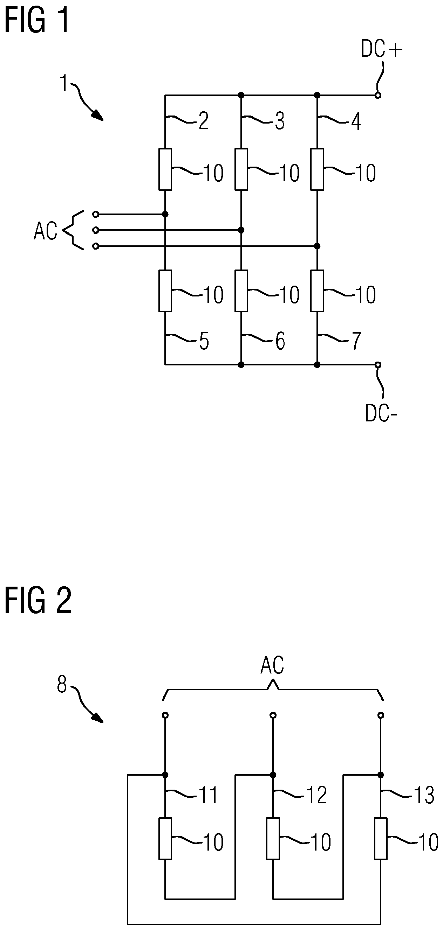

Die Figur 1 zeigt einen Modularen Multi-Level Umrichter 1, der wechselspannungsseitig an ein dreiphasiges Netz AC angeschlossen ist. Gleichspannungsseitig sind Anschlüsse DC+ und DC- vorhanden. Es wird je Umrichterzweig 2-7 je ein Modul 10 eingesetzt.

Figur 2 zeigt einen Statischen Blindleistungssteller 8, der zur Blindleistungskompensation im dreiphasigen Wechselspannungsnetz AC verwendet wird. Er weist drei Zweige 11-13 mit je einem Modul auf.

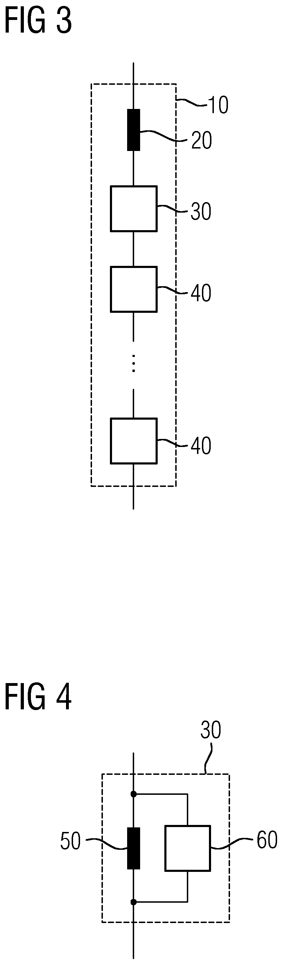

In den Figuren 3 und 4 ist ein Modul 10 , welches nicht ir den Schutzumfang der Ansprüche fällt, in einer Detailansicht abgebildet. In Reihe sind eine erste Koppelinduktivität 20, eine Einrichtung zur Vergrößerung der Gesamtinduktivität 30 mit einer zweiten Koppelinduktivität 50 und einer Schalteinrichtung 60 sowie Submodule 40 geschaltet.

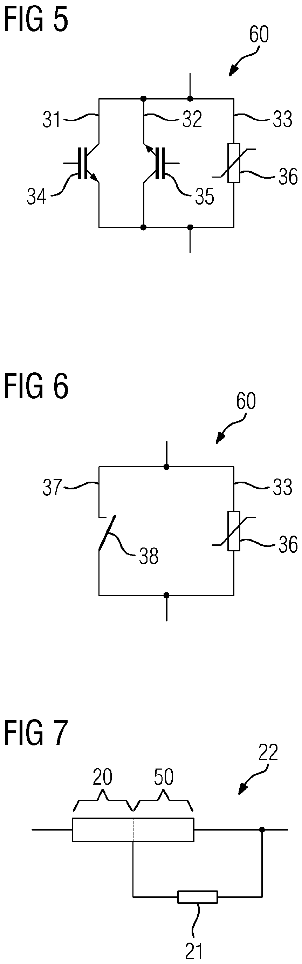

Figur 5 zeigt ein erstes Ausführungsbeispiel einer Schalteinrichtung 60, die zwei antiparallel geschaltete Halbleiterschalter (z.B. IGBTs) 34,35 in den Schalteinrichtungszweigen 31 und 32 aufweist. In einem Schalteinrichtungszweig 33 ist ein Überspannungsableiter 36 angeordnet.

Figur 6 zeigt ein zweites Ausführungsbeispiel einer Schalteinrichtung 60, die einen mechanischen Schalter 38 in einem Schalteinrichtungszweig 37 aufweist. In einem Schalteinrichtungszweig 33 ist ein Überspannungsableiter 36 angeordnet. Die Figur 7 zeigt ein Ausführungsbeispiel einer ersten und zweiten Koppelinduktivität 20,50, die als magnetisch gekoppelte Teilwicklungen einer einzigen Spule 22 ausgebildet sind. Die Teilwicklungen sind entgegengesetzt gewickelt. Die der zweiten Koppelinduktivität entsprechende Teilwicklung kann mittels eines Stellglieds 21 zu- oder abgeschaltet werden.

## Patentansprüche

1. Modul (10) für einen Umrichter (1), aufweisend Submodule (40) und eine erste Koppelinduktivität (20),
wobei eine zweite Koppelinduktivität (50) vorgesehen ist, die dazu eingerichtet ist, im Fehlerfall zugeschaltet zu werden,
wobei die erste und die zweite Koppelinduktivität (20,50) als magnetisch gekoppelte Teilwicklungen einer einzigen Spule ausgebildet sind und die der zweiten Koppelinduktivität entsprechende Teilwicklung in einem Fehlerfall mittels eines Stellglieds zuschaltbar ist,
**dadurch gekennzeichnet, dass**
die beiden magnetisch gekoppelten Teilwicklungen gegensinnig gewickelt sind und die Zuschaltung mittels des Stellglieds erfolgt, um einen Fehlerstrom zu beherrschen.

2. Modul (10) nach Anspruch 1, **dadurch gekennzeichnet, dass** die zweite Koppelinduktivität (50) parallel zu einer Schalteinrichtung (60) geschaltet ist.

3. Modul (10) nach Anspruch 2, **dadurch gekennzeichnet, dass** die Schalteinrichtung (60) ausgebildet ist, im Fehlerfall geöffnet zu werden.

4. Modul (10) nach Anspruch 2 oder 3, **dadurch gekennzeichnet, dass** die Schalteinrichtung (60) zwei antiparallel geschaltete Halbleiterschalter (34,35) aufweist.

5. Modul (10) nach einem der Ansprüche 2 bis 4, **dadurch gekennzeichnet, dass** die Schalteinrichtung (60) einen mechanischen Schalter (38) aufweist.

6. Modul (10) nach einem der Ansprüche 2 bis 5, **dadurch gekennzeichnet, dass** die Schalteinrichtung (60) einen Überspannungsableiter (36) aufweist.

7. Modul (10) nach Anspruch 2, **dadurch gekennzeichnet, dass** die Schalteinrichtung (60) ausgebildet ist, im Fehlerfall geschlossen zu werden.

8. Modul (10) nach einem der vorhergehenden Ansprüche, **dadurch gekennzeichnet, dass** die zweite Koppelinduktivität (50) einem Submodul zugeordnet ist.

9. Modul (10) nach einem der vorhergehenden Ansprüche, **dadurch gekennzeichnet, dass** mindestens eine zusätzliche Koppelinduktivität vorgesehen ist.

10. Modul (10) nach Anspruch 1, **dadurch gekennzeichnet, dass** das Stellglied zwei antiparallel geschaltete Halbleiterschalter aufweist.

11. Modul (10) nach Anspruch 1, **dadurch gekennzeichnet, dass** das Stellglied eine Stromquelle aufweist.

12. Modul (10) nach Anspruch 1, **dadurch gekennzeichnet, dass** das Stellglied einen Kondensator aufweist.

13. Verfahren zur Beherrschung von Fehlerströmen in einem Umrichter (1) mit Modulen (10), Submodulen (40) und einer ersten Koppelinduktivität (20), mit:
Erkennen eines Fehlerfalls und Zuschalten einer zweiten Koppelinduktivität (50) im Fehlerfall,
wobei die erste und die zweite Koppelinduktivität (20,50) als magnetisch gekoppelte Teilwicklungen einer einzigen Spule ausgebildet sind, und die der zweiten Koppelinduktivität entsprechende Teilwicklung mittels eines Stellglieds zugeschaltet wird,
**dadurch gekennzeichnet, dass**
die beiden magnetisch gekoppelten Teilwicklungen gegensinnig gewickelt sind und das Zuschalten mittels des Stellglieds erfolgt, um einen Fehlerstrom zu beherrschen.

## Claims

1. Module (10) for a converter (1), having submodules (40) and a first coupling inductor (20),
wherein
a second coupling inductor (50) is provided which configured to be activated in the event of a fault,
wherein the first and the second coupling inductors (20, 50) are designed as magnetically coupled partial windings of a single coil and the partial winding corresponding to the second coupling inductor can be activated in the event of a fault by means of an actuator,
**characterized in that**
the two magnetically coupled partial windings are wound in opposing directions and the activation is carried out by means of the actuator in order to control a fault current.

2. Module (10) according to Claim 1, **characterized in that** the second coupling inductor (50) is connected in parallel with a switching device (60).

3. Module (10) according to Claim 2, **characterized in that** the switching device (60) is designed to be opened in the event of a fault.

4. Module (10) according to Claim 2 or 3, **characterized in that** the switching device (60) has two antiparallel-connected semiconductor switches (34, 35).

5. Module (10) according to one of Claims 2 to 4, **characterized in that** the switching device (60) has a mechanical switch (38).

6. Module (10) according to one of Claims 2 to 5, **characterized in that** the switching device (60) has a surge arrester (36).

7. Module (10) according to Claim 2, **characterized in that** the switching device (60) is designed to be closed in the event of a fault.

8. Module (10) according to one of the preceding claims, **characterized in that** the second coupling inductor (50) is allocated to a submodule.

9. Module (10) according to one of the preceding claims, **characterized in that** at least one additional coupling inductor is provided.

10. Module (10) according to Claim 1, **characterized in that** the actuator has two antiparallel-connected semiconductor switches.

11. Module (10) according to Claim 1, **characterized in that** the actuator has a current source.

12. Module (10) according to Claim 1, **characterized in that** the actuator has a capacitor.

13. Method for controlling fault currents in a converter (1) with modules (10), submodules (40) and a first coupling inductor (20), the method comprising:
detecting a fault event and activating a second coupling inductor (50) in the event of a fault,
wherein the first and the second coupling inductors (20, 50) are designed as magnetically coupled partial windings of a single coil,
and
the partial winding corresponding to the second coupling inductor is activated by means of an actuator,
**characterized in that**
the two magnetically coupled partial windings are wound in opposing directions and the activation is carried out by means of the actuator in order to control a fault current.

## Revendications

1. Module (10) d'un convertisseur (1), comportant des sous modules (40) et une première inductance (20) de connexion,
dans lequel il est prévu une deuxième inductance (50) de connexion, qui est conçue pour être mise en circuit dans le cas d'un défaut, dans laquelle la première et la deuxième inductance (20, 50) de connexion sont constituées sous la forme d'enroulement partiel couplés magnétiquement d'une bobine unique, et l'enroulements partiels correspondant à la deuxième inductance de connexion peut être mis en circuit dans un cas de défaut au moyen d'un organe de réglage,
**caractérisé en ce que**
les deux enroulements partiels couplés magnétiquement sont enroulés en sens contraire et la mise en circuit s'effectue au moyen de l'organe de réglage pour maîtriser un courant de défaut.

2. Module (10) suivant la revendication 1, **caractérisé en ce que** la deuxième inductance (50) de connexion est montée en parallèle à un dispositif (60) de coupure.

3. Montage (10) suivant la revendication 2, **caractérisé en ce que** le dispositif (60) de coupure est constitué pour être ouvert dans le cas d'un défaut.

4. Montage (10) suivant la revendication 2 ou 3, **caractérisé en ce que** le dispositif (60) de coupure a deux interrupteurs (34, 35) à semiconducteurs montés tête bêche.

5. Montage (10) suivant l'une des revendications 2 à 4, **caractérisé en ce que** le dispositif (60) de coupure a un interrupteur (38) mécanique.

6. Montage (10) suivant l'une des revendications 2 à 5, **caractérisé en ce que** le dispositif (60) de coupure a un parafoudre (36) .

7. Montage (10) suivant la revendication 2, **caractérisé en ce que** le dispositif (60) de coupure est constitué pour être fermé dans le cas d'un défaut.

8. Montage (10) suivant l'une des revendications précédentes, **caractérisé en ce que** la deuxième inductance (50) de connexion est associée à un sous-module.

9. Montage (10) suivant l'une des revendications précédentes, **caractérisé en ce qu'**il est prévu au moins une inductance supplémentaire de connexion.

10. Montage (10) suivant la revendication 1, **caractérisé en ce que** l'organe de réglage a deux interrupteurs à semiconducteur montés tête bêche.

11. Montage (10) suivant la revendication 1, **caractérisé en ce que** l'organe de réglage a une source de courant.

12. Montage (10) suivant la revendication 1, **caractérisé en ce que** l'organe de réglage a un condensateur.

13. Procédé de maîtrise de courants de défaut dans un convertisseur (1) ayant des modules (10), des sous-modules (40) et une première inductance (20) de connexion, comprenant :
la détection d'un cas de défaut et la mise en circuit d'une deuxième inductance (50) de connexion, dans le cas d'un défaut, dans lequel la première et la deuxième inductance (20, 50) de connexion sont constituées sous la forme d'enroulements partiels couplés magnétiquement d'une bobine unique, et on met en circuit l'enroulement partiel correspondant à la deuxième inductance de connexion au moyen d'un organe de réglage,
**caractérisé en ce que** les deux enroulements partiels couplés magnétiquement sont enroulés en sens contraire, et on effectue la mise en circuit au moyen de l'organe de réglage pour maîtriser un courant de défaut.
